# EUROPEAN PATENT SPECIFICATION

(11) **EP 2 880 111 B1**
(45) Date of publication and mention of the grant of the patent: **20.04.2016**
(21) Application number: 13734424.8
(22) Date of filing: 08.07.2013
(51) Int. Cl.: C09D 183/04, C08K 9/06

(54) **HYDROPHOBIC COATING**
WASSERABWEISENDE BESCHICHTUNG
REVÊTEMENT HYDROPHILE

(30) Priority: 02.08.2012 WO PCT/CN2012/001034; 14.09.2012 EP 12184348
(43) Date of publication of application: 10.06.2015
(73) Proprietor: Unilever N.V., 3013 AL Rotterdam (NL); Unilever PLC, London, Greater London EC4Y 0DY (GB)
(72) Inventor: LI, Jinyong, Linkong Economic Development Zone Shanghai 200335 (CN); GUO, Jian, Linkong Economic Development Zone Shanghai 200335 (CN); TAO, Qingsheng, Shanghai 200335 (CN)
(74) Representative: Tansley, Sally Elizabeth
(86) International application number: PCT/EP2013/064362
(87) International publication number: WO 2014/019809

(56) References cited:
- WO-A1-2012/018598
- US-A1- 2007 189 944
- US-A1- 2008 268 233
- US-B1- 6 177 221

## Description

### FIELD OF THE INVENTION

The present invention relates to a composition for applying to surfaces to create a hydrophobic coating thereon. In particular, the present invention relates to such a composition which comprises hydrophobic colloidal particles, hydrolyzed silanes and solvent.

### BACKGROUND OF THE INVENTION

Droughts, poor irrigation and insufficient plumbing systems are just some of the reasons that cause water shortages in certain regions. Shortages of water can create serious social problems, such as health issues, that are a direct result of inadequate cleaning applications in the absence of sufficient amounts of water.

Efforts for cleaning surfaces with limited amounts of water have been made. In fact, the cleaning of surfaces that attempt to mimic the surface of a lotus leaf has been investigated. Taro leaves, for example, have been used as templates for polystyrene structures that can display a lotus leaf effect. Such structures can be used for coatings that possess superhydrophobic properties. Articles with surfaces that are difficult to wet, i.e., articles with hydrophobic surfaces, are therefore desirable since they possess self-cleaning properties when water is present at low volumes. Moreover, such coatings, subsequent to being applied, yield surfaces that make cleaning easier and faster for the consumer.

While hydrophobic, and especially superhydrophobic surfaces are desirable, compositions that result in such surfaces can be difficult to manufacture and can result in surfaces that display inferior self cleaning, a direct result, for example, of their characteristic contact angles that are too low. Moreover, reliable methods for generating superhydrophobic coatings that do not alter the look of treated surfaces are not a given.

There is an increasing interest to develop hydrophobic coatings that result in surfaces displaying high contact angles against water.

US 6,210,750 (SAMSUNG CORNING CO LTD) discloses a water-repellent glass prepared by a process which comprises: (a) preparing a colloidal silica suspension by hydrolyzing and polycondensing an alkoxysilane in an organic solvent under a basic condition in the presence of water, and then treating the colloidal silica suspension under an acidic condition, to obtain a silica dispersion containing cross-linked spherical silica particles and linear polysiloxane, (b) combining the silica dispersion with a mixed solvent composed of acetic acid and an alcohol to obtain a coating composition, (c) applying the coating composition on the surface of a glass substrate to form a silica layer therefrom, (d) heat treating the silica layer to provide a silica film on the glass substrate, and (e) applying a water-repellent agent on the silica film to provide the water-repellent glass.

H.M. Shang et al., "Optically transparent superhydrophobic silica-based films", Thin Solid Films, 2005, 472, 37-43, discloses optically transparent superhydrophobic silica-based films obtained by means of sol-gel processing and self-assembly (SA). Desired surface roughness was obtained by tuning the microstructures of the sol-gels through careful control of hydrolysis and condensation reactions of various silica precursors during sol-gel processing, whereas modification of surface chemistry was done by introducing a monolayer through surface condensation reaction.

In both of the above publications, after coating with a silica film an additional step of application of a surface modification treatment (e.g. by surface condensation of fluorocarbons) is taught in order to achieve the desired water repellency.

B.J. Basu et al., "Effect of microstructure and surface roughness on the wettability of superhydrophobic sol-gel nanocomposite coatings", J. Sol-Gel Sci. Technol., 2010, 56, 278-286, discloses sol-gel nanocomposite coatings fabricated by spraying precursor mixtures containing hydrophobically modified silica nanoparticles dispersed in sol-gel matrices prepared with acid-catalyzed tetraethoxysilane or methyltriethoxysilane.

The publication above teaches the use of films with thicknesses in the range of 15-20 µm and/or with relatively large amounts of colloidal silica particles. Such properties may not be suitable for applications where a transparent, or at least translucent, coating is desired.

The present inventors have recognized that there is a need to generate coatings that do not alter the look of surfaces they are applied on. In addition the present inventors have recognized a need for compositions for generating such a coating and that can be formulated from readily-available and/or safe materials such that the compositions may be used by consumers in-home. This invention, therefore, is directed to a composition for yielding a hydrophobic coating comprising colloidal particles cross-linked by specific types of hydrolyzed silanes. The coating of this invention is prepared by combining the colloidal particles, hydrolyzed silanes and solvent to produce a composition that cures to yield the desired coating. Such a composition can be formulated with relatively safe solvents (such as alcohols and/or aqueous solvents) and is typically capable of curing to yield a coating that is at least translucent and often transparent and/or which is durable.

### TESTS AND DEFINITIONS

### Hydrophobicity

"Hydrophobic" for the purposes of the present invention is used to describe a molecule or portion of a molecule that is attracted to, and tends to be dissolved by oil (in preference to water), or a surface that has a contact angle against water of greater than 90°. "Ultrahydrophobic" as used herein means having a contact angle of greater than 110° against water and a sliding angle of less than 45°. "Superhydrophobic" as used herein means having a contact angle of at least 140° against water and a sliding angle of less than 20°. Contact angle, as used herein, means the angle at which a water/vapor interface meets a solid surface at a temperature of 25 °C. Such an angle maybe measured with a goniometer or other water droplet shape analysis systems. Sliding angle, as used herein, means the tilt angle of a surface at which a 5 µl droplet of water slides at 25 °C.

### Oligomer

"Oligomer" for the purposes of the present invention means a molecule that consists of several monomer units, for example, from 2 to 100, more preferably, from 2 to 60 monomer units.

### Hydrolysis

"Hydrolysis" for the purposes of the present invention refers to a reaction with water. "Hydrolyzable" herein means the compound may react with water. "Hydrolyzed" means the compound is the reaction product of another compound (a precursor) with water.

### pH

pH values referred to herein are measured at a temperature of 25 °C.

### Transmittance

Values of transmittance quoted herein are determined at a wavelength of 550 nm and are measured as follows:
- An uncoated glass slide having a transmittance of 89.0% is taken as substrate.
- Composition is spread on to one side of the slide to give an even coating of about 2.86 × 10⁻⁴ mg/mm².
- The coating is cured for 10 minutes or until it forms a cohesive film.
- The coated slide is placed in a UV-vis spectrometer (e.g. Perkin-Elmer Lambda 650S) and the transmittance measured at 25 °C.

Transmittance is used herein as a measure of transparency and so should be determined in the absence of any chromophores with appreciable absorbance at 550 nm.

### Particle Size

Particle size as used herein refers to particle diameter unless otherwise stated. Diameter is meant to mean the largest measurable distance on a particle or aggregate in the event a well-defined sphere is not generated. For polydisperse samples, diameter means the z-average particle size measured, for example, using dynamic light scattering (see international standard ISO 13321) with an instrument such as a Zetasizer Nano^{™} (Malvern Instruments Ltd, UK).

"Primary particle size" refers to the diameter of particles in an unaggregated state.

### Refractive Index

Refractive index is quoted at a temperature of 25 °C and a wavelength of 589 nm.

### Miscellaneous

Except in the examples, or where otherwise explicitly indicated, all numbers in this description indicating amounts of material or conditions of reaction, physical properties of materials and/or use may optionally be understood as modified by the word "about".

All amounts are by weight of the total composition, unless otherwise specified.

It should be noted that in specifying any range of values, any particular upper value can be associated with any particular lower value.

For the avoidance of doubt, the word "comprising" is intended to mean "including" but not necessarily "consisting of" or "composed of". In other words, the listed steps or options need not be exhaustive.

The disclosure of the invention as found herein is to be considered to cover all embodiments as found in the claims as being multiply dependent upon each other irrespective of the fact that claims may be found without multiple dependency or redundancy.

Where a feature is disclosed with respect to a particular aspect of the invention (for example a composition of the invention), such disclosure is also to be considered to apply to any other aspect of the invention (for example a method of the invention) *mutatis mutandis.*

### SUMMARY OF THE INVENTION

In a first aspect, the present invention provides a composition capable of yielding a hydrophobic coating, the composition comprising:
a) hydrophobic colloidal particles;
b) first hydrolyzed quaternary silane having four hydroxyl ligands and/or its oligomer;
c) second hydrolyzed quaternary silane having at least two hydroxyl ligands and at least one hydrophobic ligand and/or its oligomer; and
d) solvent

In a second aspect the present invention provides a method for forming a hydrophobic coating on a surface, the method comprising applying the composition of any embodiment of the first aspect to the surface and drying the composition to yield the hydrophobic coating.

In a third aspect the present invention provides a hydrophobic coating obtained and/or obtainable by any embodiment of the method of the second aspect.

In a fourth aspect the present invention provides a process for the preparation of the composition of any embodiment of the first aspect, wherein the process comprises the steps of:
(i) forming a reaction mixture comprising water, first quaternary silane precursor and second quaternary silane precursor;
(ii) hydrolyzing the first and second quaternary silane precursors in the reaction mixture to provide the first and second quaternary silanes and/or their oligomers; and
(iii) combining the reaction mixture with the hydrophobic colloidal particles.

All other aspects of the present invention will more readily become apparent upon considering the detailed description and examples which follow.

### DETAILED DESCRIPTION

The only limitation with respect to the type of hydrophobic colloidal particle that may be used in this invention is that the same can be employed in a composition suitable for use by consumers to generate a hydrophobic coating. The present inventors have found that the presence of particles in the composition of the invention enhances the hydrophobicity of the final coating compositions. Without wishing to be bound by theory, the inventors believe this may be due to the structure afforded to the coating by the particles, along with their inherent hydrophobic surface property.

Examples of suitable hydrophobic colloidal particles include, for example, colloidal particles of metal salts, especially metal oxides. Suitable metal oxides include, for example, silica (SiO₂), titanium dioxide (TiO₂) alumina (Al₂O₃), zirconium dioxide (ZrO₂), tin dioxide (SnO₂), zinc oxide (ZnO), iron oxide (Fe₂O₃) and mixtures thereof. More preferred are metal oxides with hydrophobically modified surfaces.

Especially preferred, owing to their good compatibility with silanes, are hydrophobically modified silica particles.

Illustrative silica-based particles suitable for use in this invention comprise at least 25% by weight silicon dioxide (i.e., silica), and preferably, at least 50% by weight silicon dioxide, and most preferably, at least 75% to 100% by weight silicon dioxide, based on total weight of particle and including all ranges subsumed therein.

Exemplary hydrophobically modified silicas include those comprising at least one of the following groups:

-O-Si(CH₃)₃ (I)

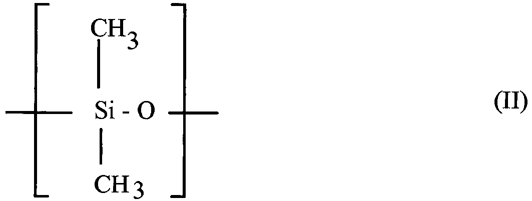

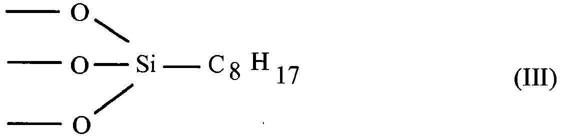

or

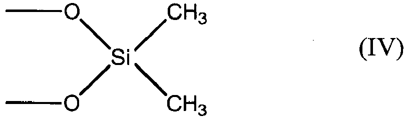

In an often preferred embodiment, the silica-based particle used is pyrogenically produced silica (i.e. fumed silica) which has been hydrophobically modfied. Without wishing to be bound by theory, the present inventors believe that the hierarchical structure of fumed silica contributes to the composition's ability to produce a hydrophobic coating.

Such silicas are described, for example, in United States Patent No. 7,282,236 and made commercially available from suppliers like Evonik Degussa GmbH under the names Aerosil^{®} R812, R812S, R202, MS202, R974, R972 and R805. Especially preferred are silicas comprising the group represented by formula (I), formula (III) or a combination thereof. Silica of the octylsilane type and comprising the group represented by formula (III) is sold, for example, under the name Aerosil^{®} R805 and silica of the hexamethyldisilazane type and comprising the group represented by formula (I) is sold, for example, under the name Aerosil^{®} R812S.

The size of the colloidal particles used in this invention has no particular limitation save that the particles are necessarily colloidal. It is preferred, however that the particles have a size of less than 500 nm to avoid the final coating from being too opaque. More preferably the particle size is from 1 to 250 nm. Additionally or alternatively, the particles will have a primary particle size in the range of 0.1 to 100 nm, more preferably 1 to 50 nm and most preferably 3 to 13 nm.

The composition preferably comprises the colloidal particles in an amount from 0.1 to 10%, and more preferably from 0.25 to 5%, and most preferably from 1 to 3% by weight based on total weight of composition and including all ranges subsumed therein.

The first hydrolyzed quaternary silane in this invention is a silane with four hydroxyl ligands. It is also possible that two or more silanol groups of the first hydrolyzed quaternary silane are condensed together to form oligomers. However, this condensation should not lead to excessive polymerization, otherwise the silane may not be well dispersed and may even precipitate.

Typically, the first hydrolyzed quaternary silane may be hydrolyzed from first quaternary silane precursor having a formula (R¹)₄Si. R¹ represents a ligand which can be hydrolyzed to a hydroxyl group. R¹ may, for example, be selected from alkoxy, halogen, or the like.

Examples of first quaternary silane precursor employed in this invention include those which comprise tetraethoxysilane (also called tetraethyl orthosilicate or TEOS), tetramethoxysilane (also called tetramethyl orthosilicate or TMOS), tetrapropoxysilane (also called tetrapropyl orthosilicate or TPOS), tetrabutoxysilane (also called tetrabutyl orthosilicate or TBOS), tetrabromosilane, tetrachlorosilane or a mixture thereof. In a more preferred embodiment, the first quaternary silane precursor comprises TEOS, TBOS or a mixture thereof.

For example, the quaternary silane precursors suitable for use in this invention include TEOS from Shanghai Chemical Reagent Co. Ltd (China) and/or TBOS from Sigma-Aldrich (Germany).

The second hydrolyzed quaternary silane in this invention is a silane having at least two hydroxyl ligands and at least one hydrophobic ligand. It is also possible that two or more silanol groups of the second hydrolyzed quaternary silane are condensed together to form oligomers. Silanol groups of the second hydrolyzed quaternary silane may additionally or alternatively be condensed with silanol groups of the first hydrolyzed quaternary silane to form mixed oligomers. However, this condensation should not lead to excessive polymerization, otherwise, the silanes may not be well dispersed and may even precipitate.

The hydrophobic ligand(s) of the second hydrolyzed quaternary silane are preferably independently selected from alkyl, alkenyl, fluoroalkyl, fluoroalkenyl, aryl, fluoroaryl and combinations thereof. Thus the second hydrolyzed quaternary silane may be hydrolyzed from second quaternary silane precursor having the formula (R¹)₄₋ₘ Si(R²)ₘ, wherein:
- each R¹ is independently selected from alkoxy and halogen;
- R² is selected from alkyl, alkenyl, fluoroalkyl, fluoroalkenyl, aryl, fluoroaryl and combinations thereof; and
- m = 1 or 2.

To provide for maximum hydrophobicity, it is preferred that R² comprises at least 2 carbon atoms, more preferably at least 3 carbon atoms, more preferably still at least 4 carbon atoms, even more preferably at least 5 carbon atoms and most preferably at least 6 carbon atoms. Longer carbon chains may, however negatively affect the stability of the silane and/or may impair its ability to condense into a gel or film. Thus it is preferred that R² comprises less than 30 carbon atoms, more preferably less than 25 and most preferably less than 20. For similar reasons it is additionally or alternatively preferred that only one of the ligands on the second hydrolyzed silane is hydrophobic, i.e., m = 1.

In a most preferred embodiment R² is alkyl, especially C₅-C₂₀ alkyl.

Examples of second quaternary silane precursor employed in this invention include those which comprise phenyltrimethoxysilane, phenyltriethoxysilane, phenyltrichlorosilane, benzyltrimethoxysilane, benzyltriethoxysilane, benzyltrichlorosilane, phenethyltrimethoxysilane, phenethyltriethoxysilane, phenethyltrichlorosilane, butyltrimethoxysilane, butyltriethoxysilane, butyltrichlorosilane, cyclohexyltrimethoxysilane, cyclohexyltriethoxysilane, cyclohexyltrichlorosilane, hexadecyltrimethoxysilane, hexadecyltriethoxysilane, hexadecyltrichlorosilane, (tridecafluoro-1,1,2,2-tetrahydro-octyl)trimethoxysilane, (tridecafluoro-1,1,2,2-tetrahydro-octyl)triethoxysilane, (tridecafluoro-1,1,2,2-tetrahydro-octyl)trichlorosilane, pentyltrimethoxysilane, pentyltriethoxysilane, trichloropentylsilane, hexyltrimethoxysilane, hexyltriethoxysilane, trichlorohexylsilane, heptyltrimethoxysilane, heptyltriethoxysilane, trichloroheptylsilane, octyltrimethoxysilane, octyltriethoxysilane, trichlorooctylsilane, decyltrimethoxysilane, decyltriethoxysilane, trichlorodecylsilane, dodecyltrimethoxysilane, dodecyltriethoxysilane, trichlorododecylsilane, octadecyltrimethoxysilane, octadecyltriethoxysilane, trichlorooctadecylsilane, or a mixture thereof.

More preferably, the second quaternary silane precursor is selected from pentyltrimethoxysilane, pentyltriethoxysilane, trichloropentylsilane, hexyltrimethoxysilane, hexyltriethoxysilane, trichlorohexylsilane, heptyltrimethoxysilane, heptyltriethoxysilane, trichloroheptylsilane, octyltrimethoxysilane, octyltriethoxysilane, trichlorooctylsilane, decyltrimethoxysilane, decyltriethoxysilane, trichlorodecylsilane, dodecyltrimethoxysilane, dodecyltriethoxysilane, trichlorododecylsilane, hexadecyltrimethoxysilane, hexadecyltriethoxysilane, hexadecyltrichlorosilane, octadecyltrimethoxysilane, octadecyltriethoxysilane, trichlorooctadecylsilane, or a mixture thereof.

For example, the second quaternary silane precursors suitable for use in this invention include hexyltrimethoxysilane, dodecyltrimethoxysilane, trichlorododecylsilane, and/or octadecyltriethoxysilane, all of which are commercially available from Tokyo Chemical Industry Co., Ltd (Japan).

The present inventors have found that inclusion of the first hydrolyzed silane in compositions of the invention can provide coatings with excellent robustness, for example in terms of scratch and/or rub resistance. The first hydrolyzed silane is, however, relatively hydrophilic and so the present inventors have found it necessary to incorporate the second hydrolyzed silane which is relatively more hydrophobic owing to presence of the hydrophobic ligand(s). Surprisingly, despite the relative hydrophilicity of the first hydrolyzed silane, the present inventors have found that even large proportions of the first hydrolyzed silane can be used in the composition without impairing its ability to yield a hydrophobic coating. For example, the weight ratio of the first hydrolyzed silane to the second hydrolyzed silane in the composition may be at least 1:1, more preferably at least 2:1, more preferably still at least 3:1 and most preferably at least 4:1. To maximise hydrophobicity of the final coating, however, it is preferred that the weight ratio of the first hydrolyzed silane to the second hydrolyzed silane in the composition is no greater than 100:1, more preferably no greater than 50:1, more preferably still no greater than 20:1 and most preferably no greater than 10:1.

The present inventors have also found that relatively low total amounts of silane are required to provide compositions which are both hydrophobic and robust. Moreover, excessive amounts of silane in the composition may lead to premature condensation polymerization and/or precipitation of the silanes. For example, the composition may comprise the first hydrolyzed silane and the second hydrolyzed silane in a total amount of no more than 10% by weight of the composition, more preferably no more than 7%, more preferably still no more than 5%, even more preferably no more than 2%, even more preferably still no more than 1 % and most preferably no more than 0.2%. The minimum amount of total silane (the amount of first hydrolyzed silane plus the amount of second hydrolyzed silane) is preferably at least 0.001 % by weight of the composition, more preferably at least 0.005%, more preferably still at least 0.01% and most preferably at least 0.02%.

Apart from the colloidal particles and silanes, the composition additionally comprises solvent. Often solvent will make up the balance of the composition but optional ingredients such as colourants, preservatives and the like may also be present in the composition. The composition may comprise the solvent in an amount, for example, of from 50 to 99.9% by weight, more preferably from 70 to 99%, more preferably still from 80 to 98% by weight, and most preferably from 90 to 97% by weight.

Preferred are volatile solvents (i.e. solvents which have a measurable vapour pressure at 25 °C). More preferred are solvents which have a vapour pressure at least equal to that of pure water at 25 °C. Volatile solvents are preferred because of their tendency to evaporate quickly and so leave behind a coating consisting of (or at least consisting essentially of) silica-based particles, first hydrolyzed silane and second hydrolyzed silane. The silanes may polymerize during the drying process and undergo a so-called sol-gel transition. Without wishing to be bound by theory, the present inventors believe that polymerization of the silanes in the final coating composition may, in part, contribute to its excellent robustness.

Occasionally, some solvent may remain in the coating and so to prevent unwanted opacity on such occasions, it is preferred to employ a solvent which has a refractive index close to that of the silanes. Thus it is preferred that the solvent has a refractive index in the range 1.2 to 1.6, more preferably 1.3 to 1.5.

Particularly preferred solvents, owing to their relative safety and high volatility, are polar organic solvent, more preferably C₁-C₄ alcohol. Most preferably the solvent comprises methanol, ethanol, propanol, isopropanol or a mixture thereof.

The solvent may additionally or alternatively comprise water, preferably in an amount of at least 5% by weight of the composition, more preferably at least 10%, more preferably still at least 15% and most preferably at least 20%. However water has poor compatibility with hydrophobic particles and so it is preferred that the amount of water in the composition is no greater than 80% by weight of the composition, more preferably no greater than 70%, more preferably still no greater than 50% and most preferably no greater than 30%.

Advantageously polar organic solvent may be used to improve the compatibility of hydrophobic particles with water. Thus in one embodiment the solvent comprises polar organic solvent (especially C₁-C₄ alcohol) and water. More preferably the solvent comprises polar organic solvent and water in a weight ratio of solvent:water of from 100:1 to 1:10, even more preferably from 20:1 to 1:2, more preferably still from 10:1 to 1:1 and most preferably from 5:1 to 2:1.

In certain embodiments, and especially where the composition is employed as a hard surface cleaning composition, it is preferably to include a surfactant in the formulation. Therefore preferably the composition comprises surfactant. The surfactant may be anionic, non-ionic, cationic, amphoteric, zwitterionic or a mixture thereof. However we have found that cationic surfactants in particular can be employed in the composition of the invention without interfering with the ability of the composition to form a hydrophobic coating. Thus preferably the surfactant comprises cationic surfactant, more preferably at least 50% by total weight of surfactant in the composition is cationic surfactant, more preferably still at least 75% by weight, most preferably from 80 to 100%.

Preferred cationic surfactants are quaternary ammonium salts. More preferably, the cationic surfactant has the formula N⁺R³R⁴R⁵R⁶ wherein R³, R⁴, R⁵ and R⁶ are independently (C₁ to C₃₀) alkyl or benzyl. Preferably, one, two or three of R³, R⁴, R⁵ and R⁶ are independently (C₄ to C₃₀) alkyl and the other R³, R⁴, R⁵ and R⁶ group or groups are (C₁-C₆) alkyl or benzyl.

The most preferred cationic surfactant is selected from cetyl-trimethylammonium bromide (CTAB), cetyl-trimethylammonium chloride (CTAC), behenyl-trimethylammonium chloride (BTAC), stearyl trimethyl ammonium chloride (STAC), benzyldimethyltetradecylammonium chloride (BDMTAC) and mixtures thereof.

Anionic surfactant can often disrupt the ability of the composition to form a hydrophobic coating. Thus it is preferred that surfactant (when present) is substantially free from anionic surfactant. More preferably less than 10% by total weight of surfactant in the composition is anionic surfactant, more preferably still less than 5% by weight, most preferably from 0 to 1 % of the surfactant in the composition is anionic surfactant.

Typically, the composition comprises surfactant in an amount of from 0.01 to 4% by weight. However, even for cationic surfactants, high levels can, in some instances, interfere with the composition's ability to form hydrophobic coatings. Therefore it is preferred that the composition comprises less than 1 % surfactant by weight of the composition, more preferably less than 0.7%, even more preferably less than 0.5% and most preferably from 0.05 to 0.3%.

In some embodiments the composition may be substantially free from surfactant. More preferably such compositions comprise less than 0.01 % surfactant by weight of the composition, most preferably from 0 to 0.001 %.

The composition of the invention may have any suitable pH. However, we have surprisingly found that the stability of the compositions is best if they are not too acidic. Thus it is preferred that the pH of the composition is in the range of 5 to 10, more preferably 6 to 8.

The composition of the invention is used to prepare a hydrophobic coating. The method for making a hydrophobic coating on a surface preferably comprises the steps of applying the composition to a surface and allowing the composition to dry. The silanes may (further) polymerize during the drying process and undergo a so-called sol-gel transition. Without wishing to be bound by theory, the present inventors believe that polymerization of the silanes in the final coating composition may, in part, contribute to its excellent robustness.

Typically, after drying, the coating will comprise less than 30% solvent by weight of the coating, more preferably less than 20%, more preferably still less than 10% and most preferably from 0.001 to 5%.

The coating is hydrophobic. In some instances, for example, the coating may be ultrahydrophobic, or even superhydrophobic. More preferably, the coating may display a contact angle for water of at least 145 degrees or even from 150 to 160 degrees. Additionally or alternatively the coating may display a sliding angle for water of less than 15 degrees or even from 0.1 to 10 degrees.

The coating is typically at least translucent and often transparent. For example, the coating may display a transmittance value of at least 80%, more preferably at least 85% and most preferably from 87 to 95%.

The composition of the present invention is preferably suitable for treating a hard surface, especially to aid cleaning or soil-resistance of the hard surface. "Hard surface" for the purposes of the present invention means any surface comprising a hard material such as glass, glazed ceramics, metal, stone, plastics, lacquer, wood, or combination thereof. Typically, the hard surface is in a household including window, kitchen, bathroom, toilet, furniture, floor, or the like.

When treating a hard surface by the composition, any general way for treating a hard surface is acceptable. Typically, the way for treating a hard surface by the composition is spraying the composition onto the hard surface, or wiping the hard surface by wipe impregnated with the composition, or pouring the composition onto the hard surface, or combination thereof. Preferably, the way for treating a hard surface is spraying the composition onto a hard surface, and/or wiping a hard surface by wipe impregnated with the composition. When spraying is employed for treating a hard surface, there is no limitation how the composition is sprayed. Typically, a spraying bottle for hard surface cleaning product is favourable. When wiping is employed for treating a hard surface, wipe including woven or nonwoven cloth, natural or synthetic sponges or spongy sheets, "squeegee" materials, paper towel, or the like is suitable. The wipe may be impregnated dry, or more preferably in wet form.

Whilst not being bound by any particular theory or explanation, we believe that the composition exerts it effect by depositing hydrolyzed quaternary silane and/or its oligomer, and hydrophobic particles onto a hard surface, forming a hydrophobic layer attached to the hard surface. The layer could enhance resistance to deposition of soil and/or stains or at least make such substances easier to remove.

Thus, after treating the surface with the composition, the method for treating a hard surface may optionally further comprises the steps of allowing soil and/or stains to deposit. Thus, the soil or stains will be easily removed when the hard surface is subsequently cleaned according to the method of this invention. Meanwhile, the composition of the invention is also preferably applied to the hard surface during the subsequent cleaning. Optionally, treating of a hard surface with the composition may be followed by a rinsing step, preferably with water.

Therefore a most preferred method for treating a hard surface comprises:
I. forming the hydrophobic coating on the surface;
II. allowing soil and/or stains to deposit on the coating; and then
III. cleaning the surface to remove the soil and/or stains.

The present invention may also deliver other benefits such as long last cleaning, less effort for cleaning, less surface corrosion, less noise during cleaning, and/or scratch resistance. Further aspects of the present invention comprise methods for obtaining one or more these other benefits in a hard surface cleaning operation and/or use the composition in the methods in the manufacture of products for delivering any one more such benefits mentioned in this invention.

The soils and stains of present invention may comprise all kinds of soils and stains generally encountered in the household, either of organic or inorganic origin, whether visible or invisible to the naked eye, including soiling solid debris and/or with bacteria or other pathogens. Specifically the method and compositions according to the invention may be used to treat surface susceptible to fatty or greasy soil and stains.

The composition of the invention may be made in any convenient way. Suitably, however, the composition is prepared by a process comprising the steps of:
(i) forming a reaction mixture comprising water, first quaternary silane precursor and second quaternary silane precursor;
(ii) hydrolyzing the first and second quaternary silane precursors in the reaction mixture to provide the first and second hydrolyzed quaternary silanes and/or their oligomers; and
(iii) combining the reaction mixture with the hydrophobic colloidal particles.

When forming a reaction mixture comprising water and the quaternary silane precursors, there is no limitation in respect to the sequence of mixing water and quaternary silane precursors. Either water is added into quaternary silane precursors, or quaternary silane precursors are added into water. Generally, stirring is used for making water and quaternary silane precursor well mixed.

Similarly, there is no limitation in respect to the sequence of combining the reaction mixture with the hydrophobic colloidal particles. However, in a preferred embodiment step (iii) occurs prior to or during step (ii) as in this way the colloidal particles may to a greater or lesser extent interact with the silanes during the hydrolysis process. Especially where the particles comprise silica, this may lead to some bonding of hydrolyzed silane with the particles as we have found that durability of the final coating is improved if compositions are prepared in this manner (although with a slight loss of transparency). Thus in an especially preferred embodiment the process comprises the following steps:
A) providing reaction mixture comprising hydrophobically-modified colloidal silica particles, first quaternary silane precursor, second quaternary silane precursor and water; and then
B) hydrolyzing the first and second quaternary silane precursors in the reaction mixture to provide the first and second hydrolyzed quaternary silanes and/or their oligomers.

Excessive amounts of silane in the reaction mixture may lead to premature condensation polymerization and/or precipitation of the silanes. For example, the mixture may comprise the first quaternary silane precursor and the second quaternary silane precursor in a total amount of no more than 10% by weight of the mixture, more preferably no more than 7%, more preferably still no more than 5%, even more preferably no more than 2% and most preferably no more than 1%. The minimum amount of total silane (the amount of first quaternary silane precursor plus the amount of second quaternary silane precursor) is preferably at least 0.001% by weight of the mixture, more preferably at least 0.005%, more preferably still at least 0.01% and most preferably at least 0.02%.

The weight ratio of the first quaternary silane precursor to the second quaternary silane precursor in the mixture may be, for example, at least 1:1, more preferably at least 2:1, more preferably still at least 3:1 and most preferably at least 4:1. Additionally or alternatively, the weight ratio of the first quaternary silane precursor to the second quaternary silane precursor in the mixture may be, for example, no greater than 100:1, more preferably no greater than 50:1, more preferably still no greater than 20:1 and most preferably no greater than 10:1.

Hydrolysis of the quaternary silane precursors could be carried out when the mixture is either acidic or alkali. To avoid excessive polymerization, the mixture is preferably acidic. More preferably, the pH value of the mixture is in the range of 2 to 7, most preferably 3 to 5. The lower the pH of the mixture is, the faster the hydrolysis of quaternary silane precursor will be. There is no limitation for the acid used to tune the pH of the mixture, for example, hydrochloric acid, sulphuric acid, citric acid , oxalic acid or combinations thereof may be used.

If the mixture is acidic during the hydrolysis step, following the hydrolysis step the pH of the mixture is preferably adjusted to be in the range of 5 to 10, more preferably 6 to 8.

The reaction mixture may additionally comprise polar organic solvent.

The composition may be packed in any form, but preferably is packaged as a conventional hard surface treatment or cleaning product. The preferred packaging is a spray applicator. Pump dispersers (whether spray or non-spray pumps) and pouring applications (bottles etc) are also possible. It is also possible to impregnate a wipe with the composition.

The following examples are provided to facilitate an understanding of the present invention. The examples are not provided to limit the scope of the claims.

### EXAMPLES

### Materials

- Aerosil^{®}R812S was hexamethyldisilazane-modified silica particles (average primary particle size 7 nm) supplied by Evonic AG.
- RHODORSIL^{®} BP9400 was alkylpolysiloxane oligomer from Bluestar Silicones.
- HTS was hexyltrimethoxysilane from Tokyo Chemical Industry Co., Ltd.
- DTS was n-dodecyltrimethoxysilane from Tokyo Chemical Industry Co., Ltd.
- TEOS was tetraethylorthosilicate from Sinopharm Chemical Reagent Co.
- CTAB was cetyl-trimethylammonium bromide from Rhodia.
- CTAC was cetyl-trimethylammonium chloride from Clariant.
- BTAC was behenyl-trimethylammonium chloride from KCI Limited.
- STAC was stearyl trimethylammonium chloride from Clariant.

All other materials were analytical grade unless otherwise stated.

### Preparation of Particle-Silane Dispersions

Sols were prepared by co-hydrolysis and condensation of two silane precursors, TEOS and silane having a hydrophobic ligand (HTS or DTS). The silanes were dispersed in alcoholic (ethanol and/or isopropanol) solvent and water under stirring for 30 min at room temperature (25 °C). Hydrochloric acid (36.5 wt%) was then added into the solution under stirring at room temperature for 3 hours to induce hydrolysis and condensation of the silanes and produce the base sol compositions.

Hydrophobic fumed silica particles (Aerosil^{®}R812S) were added to base sols (prepared as above) under ultrasonication for 15 minutes. Unless stated otherwise, the pH of prepared hydrolysed silane/silica dispersion was adjusted to about 7~8 using ammonia (25 wt%) ready for use.

Where surfactant was included in the compositions, this was added to the dispersion after it was prepared as above.

### Preparation of Coatings

Glass slides were chosen as model substrate. Pipette was used to drop the dispersions on the glass slide in a controlled amount. After the dispersion was dropped on the target surface, the tip of the pipette was used to spread the composition on the surface to ensure uniform coating. For spray coating, a trigger-sprayer which is widely used in home care or personal care products was used to apply the composition on surfaces. After the dispersion was sprayed towards the target surface, tissue or cloth was used to wipe the target surface in order to homogenize the coating and remove excess dispersion.

After application of the dispersion on the substrate, the solvent was allowed to evaporate (typical evaporation time was 10-15 min) at room temperature. It is expected that the silanes undergo further polycondensation on the substrate surface to form a durable coating during this drying and, at the same time, the silica particles are embedded in the resulting network.

### Characterisation of Coatings

- Drop shape analysis system 100 (DSA 100, Krüss) was used to measure contact angle and sliding angle. DSA 100 with the tilting table maximum utilization of field of view up to 90 degrees was used for sliding angle test using deionised water drops of around 5 µL applied to five different points of each film and the sliding angle averaged over all 5 drops.
- The visible light transmittance of the coatings was measured by a UV-Vis spectrometer (Perkin-Elmer Lambda 650S).
- Durability of films was determined using the pull-off test method with Scotch 600 tape (3M) as described in M.H. Blees et al. (Thin Solid Film, 359,1).

### Example 1

This example demonstrates the effect of the presence and amount of silane having a hydrophobic ligand (HTS) on the properties of coatings.

Here, no fumed silica particles were added to the compositions before coating.

Table 1 lists the composition of the sols tested along with the contact angle of coatings prepared from the sols.

**TABLE 1**

| **Sample** | **TEOS (wt%)** | **HTS (wt%)** | **Water (wt%)** | **HCl* (wt%)** | **Isopropanol (wt%)** | **Contact Angle** (degrees)** |
|---|---|---|---|---|---|---|
| 1 | 5.9 | 0.00 | 10.6 | 1.2 | To 100 | 24.0 ± 0.9 |
| 2 | 5.8 | 0.96 | 10.5 | 1.2 | To 100 | 114.5 ± 1.4 |
| 3 | 5.8 | 1.9 | 10.4 | 1.2 | To 100 | 106.0 ± 1.2 |
| 4 | 5.7 | 2.8 | 10.3 | 1.2 | To 100 | 106.0 ± 2.1 |
| 5 | 5.7 | 3.7 | 10.2 | 1.2 | To 100 | 107.1 ± 2.3 |
| 6 | 5.6 | 4.6 | 10.1 | 1.2 | To 100 | 101.5 ± 1.0 |

| | | | | | | |
|---|---|---|---|---|---|---|
| * Amount given is amount of 36.5 wt% aqueous solution. ** Error given is 95% confidence interval. | | | | | | |

This data shows that in the absence of HTS (Sample 1), the coatings were not hydrophobic. Addition of even a small amount of HTS (Sample 2) allowed for creation of hydrophobic coatings. Further increasing the amount of HTS (Samples 3 to 6) did not increase the hydrophobicity of the films and may, in fact, have slightly decrease the hydrophobicity.

### Example 2

This example demonstrates the effect of the amount of water on the properties of coatings (again no fumed silica particles were added to the compositions before coating).

Table 2 lists the composition of the sols tested and contact angles of coatings prepared from the sols.

**TABLE 2**

| **Sample** | **TEOS (wt%)** | **HTS (wt%)** | **Water (wt%)** | **HCl* (wt%)** | **Isopropanol (wt%)** | **Contact Angles** (degrees)** |
|---|---|---|---|---|---|---|
| 7 | 6.5 | 1.06 | 0.0 | 1.4 | To 100 | 96.0 ± 0.8 |
| 8 | 5.8 | 0.96 | 10.5 | 1.2 | To 100 | 114.5 ± 1.4 |
| 9 | 5.3 | 0.86 | 18.8 | 1.1 | To 100 | 105.6 ± 0.9 |
| 10 | 4.8 | 0.78 | 25.8 | 1.0 | To 100 | 110.0 ± 2.1 |
| 11 | 4.4 | 0.73 | 31.7 | 0.9 | To 100 | 101.8 ± 1.7 |

| | | | | | | |
|---|---|---|---|---|---|---|
| * Amount given is amount of 36.5 wt% aqueous solution. ** Error given is 95% confidence interval. | | | | | | |

This data shows that addition of no extra water (i.e. other than the water in the hydrochloric acid solution), results in films which are only slightly hydrophobic (Sample 7). Adding water in amounts from about 10 to around 26 wt% (Samples 8 to 10) gave more hydrophobic films. Increasing the amount of water above 30 wt% (Sample 11), however, did not increase the hydrophobicity of the film further and may, in fact, have slightly decrease the hydrophobicity.

### Example 3

This example demonstrates the effect of the amount of hydrophobic particles on the properties of coatings.

Base sols were prepared with the compositions given in Table 3.

**TABLE 3**

| **Base Sol** | **TEOS (wt%)** | **Ethanol (wt%)** | **HCl* (wt%)** | **DTS (wt%)** | **Water (wt%)** |
|---|---|---|---|---|---|
| A | 0.18 | To 100 | 0.075 | 0.034 | 0.38 |
| B | 0.12 | To 100 | 0.075 | 0.022 | 0.25 |
| C | 0.059 | To 100 | 0.075 | 0.011 | 0.13 |
| D | 0.030 | To 100 | 0.075 | 0.006 | 0.063 |

| | | | | | |
|---|---|---|---|---|---|
| * Amount given is amount of 36.5 wt% aqueous solution. | | | | | |

The base sols were then used to prepare dispersions with varying levels of hydrophobic fumed silica particles (Aerosil^{®}R812S). The contact angle and transparency of coating made from these dispersions are summarized in Table 4.

**TABLE 4**

| **Sample** | **Base Sol** | **Fumed Silica (wt%)** | **Contact Angle* (degrees)** | **Transmittance (%)** |
|---|---|---|---|---|
| 12 | A | 0.00 | 108.6 ± 0.9 | 92 |
| 13 | A | 0.25 | 122.3 ± 3.2 | 82 |
| 14 | A | 0.50 | 133.9 ± 2.2 | 82 |
| 15 | A | 1.00 | 152.7 ± 2.1 | 85 |
| 16 | A | 1.50 | 150.7 ± 3.0 | 78 |
| 17 | A | 2.00 | 148.5 ± 2.7 | 87 |
| 18 | A | 2.50 | 153.3 ± 4.5 | 89 |
| 19 | B | 0.00 | 107.1 ± 1.0 | 90 |
| 20 | B | 0.25 | 141.2 ± 2.2 | 86 |
| 21 | B | 0.50 | 139.8 ± 1.9 | 88 |
| 22 | B | 1.00 | 135.5 ± 3.3 | 89 |
| 23 | B | 1.50 | 149.9 ± 2.4 | 85 |
| 24 | B | 2.00 | 147.4 ± 1.5 | 90 |
| 25 | B | 2.50 | 155.2 ± 2.7 | 89 |
| 26 | C | 0.00 | 107.4 ± 1.1 | 88 |
| 27 | C | 0.25 | 140.3 ± 5.0 | 88 |
| 28 | C | 0.50 | 143.7 ± 3.7 | 87 |
| 29 | C | 1.00 | 150.6 ± 2.1 | 87 |
| 30 | C | 1.50 | 153.9 ± 1.1 | 87 |
| 31 | C | 2.00 | 155.5 ± 3.1 | 89 |
| 32 | C | 2.50 | 156.7 ± 1.7 | 87 |
| 33 | D | 0.00 | 108.7 ± 0.9 | 91 |
| 34 | D | 0.25 | 128.8 ± 4.1 | 89 |
| 35 | D | 0.50 | 143.2 ± 3.2 | 89 |
| 36 | D | 1.00 | 152.0 ± 3.0 | 84 |
| 37 | D | 1.50 | 150.8 ± 1.7 | 88 |
| 38 | D | 2.00 | 152.5 ± 4.0 | 86 |
| 39 | D | 2.50 | 152.9 ± 2.5 | 88 |

| | | | | |
|---|---|---|---|---|
| * Error given is 95% confidence interval. | | | | |

This data shows that when silica particles were added to the sols, these particles increased greatly the hydrophobicity of the final coating. When only 0.25 wt % silica particles were added the contact angle of coatings prepared from base sol B reached over 140°. The general trend is that contact angle increases with increasing amount of the added fumed silica. When the silica particles level was above 1.0 wt%, most of the coatings showed superhydrophobic behaviour and had a very low sliding angle (less than 8°). When the silica particle level in the dispersion was in the range 2 to 2.5 wt%, the contact angle increased to near or over 150° and the 5 µl water droplets rolled away from the surface when the glass was titled only to about 2 to 5°.

The transparency of coatings was characterized quantitatively by the transmittance of coating at 550 nm wavelength. The transmittance of uncoated slides was 89.0%. Thus the data in Table 4 show that all of the coatings had near or total transparency. The transmittance of these coating is in the range from 78% to 92%. This is surprising as some samples show higher transmission of visible light than blank glass. However, some samples show inferior transmission than blank glass. In general, coating made from dispersions based on sols B, C or D showed the best transparency. This may be because the higher amount of total silane in base sol A leads to a high level of crosslinked polysilane and larger size aggregates of silica particles.

### Example 4

This example demonstrates the effect of the type of solvent on the properties of coatings.

Base sols were prepared with the compositions given in Table 5.

**TABLE 5**

| **Base Sol** | **TEOS(□l)** | **Ethanol (ml)** | **Isopropanol (ml)** | **HCl* (µl)** | **DTS (µl)** | **Water (µl)** |
|---|---|---|---|---|---|---|
| E | 20 | 20 | - | 10 | 4 | 40 |
| F | 20 | -- | 20 | 10 | 4 | 40 |

| | | | | | | |
|---|---|---|---|---|---|---|
| * Amount given is amount of 36.5 wt% aqueous solution. | | | | | | |

The base sols were then used to prepare dispersions with varying levels of hydrophobic fumed silica particles (Aerosil^{®}R812S). The contact angle and transparency of coatings made from these dispersions are summarized in Table 6.

**TABLE 6**

| **Sample** | **Base Sol** | **Fumed Silica (wt%)** | **Contact Angle* (degrees)** | **Transmittance (%)** |
|---|---|---|---|---|
| 40 | E | 0.25 | 131.3 ± 3.5 | 86 |
| 41 | E | 0.50 | 137.3 ± 2.7 | 88 |
| 42 | E | 1.00 | 146.5 ± 2.2 | 89 |
| 43 | E | 1.50 | 149.9 ± 1.7 | 85 |
| 44 | E | 2.00 | 147.4 ± 2.0 | 90 |
| 45 | E | 2.50 | 155.2 ± 2.1 | 89 |
| 46 | F | 0.25 | 135.2 ± 4.1 | 86 |
| 47 | F | 0.50 | 141.0 ± 2.3 | 88 |
| 48 | F | 1.00 | 141.8 ± 5.1 | 89 |
| 49 | F | 1.50 | 142.0 ± 2.1 | 86 |
| 50 | F | 2.00 | 152.7 ± 1.9 | 87 |
| 51 | F | 2.50 | 150.3 ± 2.1 | 88 |

| | | | | |
|---|---|---|---|---|
| * Error given is 95% confidence interval. | | | | |

The data in this table demonstrate that both ethanol and isopropanol-based solvents are suitable for providing dispersions which dry to yield coatings with excellent hydrophobicity and transparency.

### Example 5

This example demonstrates the durability of coatings made from various dispersions of hydrophobic fumed silica.

The compositions of the dispersions are given in Table 7.

**TABLE 7**

| **Sample** | **Aerosil^{®}R812S (wt%)** | **RHODORSIL^{®} BP9400(wt%)** | **TEOS (wt%)** | **DTS (wt%)** | **Ethanol (wt%)** | **HCl* (wt%)** | **Water (wt%)** |
|---|---|---|---|---|---|---|---|
| 52 | 1.5 | - | - | - | To 100 | - | - |
| 53 | 1.5 | 0.8 | - | - | To 100 | - | - |
| 54 | 1.5 | - | 0.029 | 0.006 | To 100 | 0.069 | 0.062 |

| | | | | | | | |
|---|---|---|---|---|---|---|---|
| * Amount given is amount of 36.5 wt% aqueous solution. | | | | | | | |

The results of the pull-off test applied to coatings made from the above dispersions are given in Table 8.

**TABLE 8**

| **Sample** | **Contact Angle (Degrees) After** | | | | | |
|---|---|---|---|---|---|---|
| | **Start** | **1^{st} Pull-off** | **2^{nd} Pull-off** | **3^{rd} Pull-off** | **4^{th} Pull-off** | **5^{th} Pull-off** |
| 52 | 150.9 | 20.9 | 33.5 | 36.7 | 43.8 | 48.3 |
| 53 | 147.0 | 116.9 | 92.0 | 85.7 | 88.4 | 85.0 |
| 54 | 153.0 | 152.1 | 133.7 | 113.0 | 111.9 | 102.7 |

As can be seen from the data in Table 8, the original contact angles of these three coatings are all around 150°. It is observed after the first pull-off test, the coating prepared from a dispersion of only silica in alcohol (Sample 52) lost all hydrophobicity. For the coating prepared from silica and silicone in alcohol (Sample 53), after the first pull-off test the coating still showed hydrophobicity but as the number of pull-off times increases the contact angle of the coating gradually decreases. After about the third pull-off test the contact angle had fallen to about 80° and subsequent pull-off has little effect on the contact angle. For superhydrophobic coating prepared from a dispersion of silica in alcoholic sol of silanes (Sample 54), it is observed that the first pull-off test has little effect on the contact angle of the coating. After the second pull-off, the coating still shows a high contact angle of 134°. Even after the fifth pull-off, the contact angle of the coating remains over 100°. Thus the coating made from hydrolyzed silane (Sample 54) shows excellent durability.

### Example 6

This example demonstrates the storage stability of dispersions of hydrophobic fumed silica.

The compositions and pH of the dispersions are given in Table 9.

**TABLE 9**

| **Sample** | **Aerosil^{®} R812S (wt%)** | **HTS (wt%)** | **TEOS (wt%)** | **Isopropanol (wt%)** | **Ethanol (wt%)** | **HCl^{*} (wt%)** | **Water (wt%)** | **Ammonia (wt%)** | **pH** |
|---|---|---|---|---|---|---|---|---|---|
| 55 | 2.0 | 0.94 | 5.7 | To 100 | - | 1.2 | 9.3 | - | 3 |
| 56 | 2.0 | 0.91 | 5.5 | To 100 | - | 1.2 | 10 | 1.6 | 7 |
| 57 | 2.0 | 0.93 | 5.7 | - | To 100 | 1.2 | 11 | - | 3 |
| 58 | 2.0 | 0.90 | 5.5 | - | To 100 | 1.1 | 13 | 1.7 | 7 |

| | | | | | | | | | |
|---|---|---|---|---|---|---|---|---|---|
| * Amount given is amount of 36.5 wt% aqueous solution. | | | | | | | | | |

Portions of each dispersion were stored in sealed containers, with some containers held at a constant temperature of 25 °C and others at a constant temperature of 37 °C. Samples were taken at 1 and 3 months and assessed in terms of both appearance and ability to form a superhydrophobic coating. The results are shown in Table 10, using the following symbols:
√ - Good appearance; Superhydrophobic coating formed.
⊗ - Slight sedimentation or visible aggregates; Superhydrophobic coating formed.
x - Obvious sedimentation; Reduced hydrophobicity of coating.

**TABLE 10**

| **Sample** | **Condition after storage at** | | |
|---|---|---|---|
| | **25 °C for 1 month** | **25 °C for 3 months** | **37 °C for 1 month** |
| 55 | √ | ⊗ | × |
| 56 | √ | √ | √ |
| 57 | √ | ⊗ | × |
| 58 | √ | √ | √ |

The results in Table 10 show that all the samples had good stability after even three months storage at room temperature. After 3 months, sedimentation was apparent in the compositions with pH 3 but these compositions still had reasonable appearance and retained the ability to form superhydrophobic coatings. The samples having pH of 7 showed the best stability whether at room temperature or at 37 °C.

### Example 7

This example demonstrates the compatibility of certain dispersions with cationic surfactants.

The compositions of the dispersions are given in Table 11.

**TABLE 11**

| **Sample** | **Aerosil^{®}R812S (wt%)** | **DTS (wt%)** | **TEOS (wt%)** | **Isopropanol (wt%)** | **CTAB (wt%)** | **HCl^{*} (wt%)** | **Water (wt%)** |
|---|---|---|---|---|---|---|---|
| 59 | 1.0 | 0.007 | 0.036 | To 100 | 0.0 | 0.046 | 39 |
| 60 | 1.0 | 0.007 | 0.036 | To 100 | 0.1 | 0.045 | 39 |
| 61 | 1.0 | 0.007 | 0.035 | To 100 | 0.5 | 0.045 | 38 |
| 62 | 1.0 | 0.007 | 0.035 | To 100 | 1.0 | 0.045 | 38 |
| 63 | 1.0 | 0.007 | 0.035 | To 100 | 1.5 | 0.045 | 38 |
| 64 | 1.0 | 0.007 | 0.035 | To 100 | 2.0 | 0.045 | 38 |

| | | | | | | | |
|---|---|---|---|---|---|---|---|
| * Amount given is amount of 36.5 wt% aqueous solution. | | | | | | | |

The contact angles and appearance of films made from these compositions are given in Table 12.

**TABLE 12**

| **Sample** | **Contact Angle* (degrees)** | **Film Appearance** |
|---|---|---|
| 59 | 150 ± 3 | Homogenous and transparent |
| 60 | 149 ± 2 | Homogenous and transparent |
| 61 | 141 ± 4 | Some milky regions apparent |
| 62 | 15 ± 11 | Clear separation with distinct milky regions |
| 63 | 12 ± 2 | Clear separation with distinct milky regions |
| 64 | 8 ± 2 | Clear separation with distinct milky regions |

| | | |
|---|---|---|
| * Error given is 95% confidence interval. | | |

The results in Table 12 show that for samples containing less than 1.0% CTAB, it was possible to produce hydrophobic films. Increasing the level of cationic surfactant increasingly destabilises the film and destroys its hydrophobicity.

### Example 8

This example demonstrates compositions suitable for cleaning hard surfaces.

The compositions are given in Table 13.

**TABLE 13**

| **Ingredient (wt%)** | **Sample 65** | **Sample 66** | **Sample 67** | **Sample 68** |
|---|---|---|---|---|
| Aerosil^{®}R812S | 1.000 | 1.000 | 1.000 | 1.000 |
| DTS | 0.007 | 0.007 | 0.007 | 0.007 |
| TEOS | 0.036 | 0.036 | 0.036 | 0.036 |
| Isopropanol | To 100 | To 100 | To 100 | To 100 |
| HCl* | 0.045 | 0.045 | 0.045 | 0.045 |
| Water | 39 | 39 | 39 | 39 |
| CTAB | 0.1 | -- | -- | -- |
| CTAC | -- | 0.1 | -- | -- |
| BTAC | -- | -- | 0.1 | -- |
| STAC | -- | -- | -- | 0.1 |

| | | | | |
|---|---|---|---|---|
| * Amount given is amount of 36.5 wt% aqueous solution. | | | | |

All of Samples 65-58 were found to form transparent superhydrophobic coatings.

The cleaning performance of Samples 65-68 was compared to that of a commercial hard surface cleaner in both a first and second cleaning operation. The above samples had slightly poorer performance than the commercial cleaner for the first cleaning operation but still gave acceptable results. On the second cleaning operation, the above samples performed as good, if not better than the commercial cleaner.

## Claims

1. A composition capable of yielding a hydrophobic coating, the composition comprising:
a) hydrophobic colloidal particles;
b) first hydrolyzed quaternary silane having four hydroxyl ligands and/or its oligomer;
c) second hydrolyzed quaternary silane having at least two hydroxyl ligands and at least one hydrophobic ligand and/or its oligomer; and
d) solvent.

2. The composition as claimed in claim 1, wherein the colloidal particles are hydrophobically modified silica particles, preferably hydrophobically-modified fumed silica particles.

3. The composition as claimed in claim 2, wherein the silica particles comprise at least one of the following groups:
-O-Si(CH₃)₃ (I) 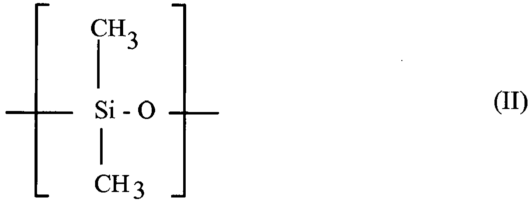 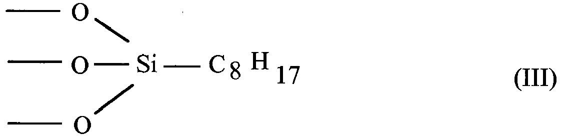
or

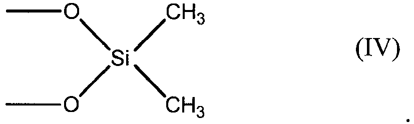

4. The composition as claimed in any one of the preceding claims, wherein the first hydrolyzed quaternary silane is hydrolyzable from a first quaternary silane precursor having the formula (R¹)₄ Si, wherein each R¹ is independently selected from alkoxy and halogen, preferably wherein the first quaternary silane precursor comprises tetraethoxysilane, tetramethoxysilane, tetrapropoxysilane, tetrabutoxysilane, tetrabromosilane, tetrachlorosilane, or a mixture thereof.

5. The composition as claimed in any one of the preceding claims, wherein the second hydrolyzed quaternary silane is hydrolyzable from a second quaternary silane precursor having the formula (R¹)₄₋ₘ Si(R²)ₘ, wherein:
- each R¹ is independently selected from alkoxy and halogen;
- R² is selected from alkyl, alkenyl, fluoroalkyl, fluoroalkenyl, aryl, fluoroaryl and combinations thereof; and
- m = 1 or 2, preferably m = 1.

6. The composition as claimed in claim 5 wherein R² comprises at least 2 carbon atoms, preferably R² is C₃-C₃₀.

7. The composition as claimed in any one of the preceding claims, wherein the weight ratio of the first hydrolyzed silane to the second hydrolyzed silane is at least 1:1, preferably in the range of from 2:1 to 50:1.

8. The composition as claimed in any one of the preceding claims, wherein the composition comprises the hydrophobic colloidal particles in an amount of from 0.1 to 10% by weight of the composition.

9. The composition as claimed in any one of the preceding claims, wherein the composition comprises the first hydrolyzed silane and the second hydrolyzed silane in a total amount of from 0.001 to 10% by weight of the composition.

10. The composition as claimed in any one of the preceding claims, wherein the solvent comprises a polar organic solvent, preferably wherein the polar organic solvent comprises C₁-C₄ alcohol.

11. The composition as claimed in any one of the preceding claims, wherein the solvent comprises water, preferably wherein the solvent comprises water in an amount of from 5 to 50% by weight of the composition.

12. A method for forming a hydrophobic coating on a surface, the method comprising applying the composition of any one of claims 1 to 11 to the surface and drying the composition to yield the hydrophobic coating.

13. A method for treating a hard surface comprising:
I. forming a hydrophobic coating on the surface by the method of claim 12;
II. allowing soil and/or stains to deposit on the coating; and then
III. cleaning the surface to remove the soil and/or stains,
preferably wherein step III comprises applying the composition of any one of claims 1 to 11 to the surface.

14. A hydrophobic coating obtainable by the method of claim 12, wherein the coating displays a contact angle for water of at least 110 degrees, a sliding angle for water of less than 45 degrees, or both.

15. A process for the preparation of a composition as claimed in any one of claims 1 to 11, wherein the process comprises the steps of:
(i) forming a reaction mixture comprising water, first quaternary silane precursor and second quaternary silane precursor;
(ii) hydrolyzing the first and second quaternary silane precursors in the reaction mixture to provide the first and second hydrolyzed quaternary silanes and/or their oligomers; and
(iii) combining the reaction mixture with the hydrophobic colloidal particles, preferably wherein step (iii) occurs prior to or during step (ii).

## Patentansprüche

1. Zusammensetzung die in der Lage ist, eine wasserabweisende Beschichtung zu ergeben, wobei die Zusammensetzung umfasst:
a) hydrophobe kolloidale Teilchen;
b) erstes hydrolysiertes quaternäres Silan mit vier Hydroxylliganden und/oder dessen Oligomer;
c) zweites hydrolysiertes quaternäres Silan mit mindestens zwei Hydroxylliganden und mindestens einem hydrophoben Liganden und/oder dessen Oligomer, und
d) Lösungsmittel.

2. Zusammensetzung gemäß Anspruch 1, wobei die kolloidalen Teilchen hydrophob modifizierte Siliciumdioxid-Teilchen sind, vorzugsweise hydrophob modifizierte pyrogene Siliciumdioxid-Teilchen.

3. Zusammensetzung gemäß Anspruch 2, wobei die Siliciumdioxid-Teilchen mindestens eines aus den folgenden Gruppen umfassen:
- O - Si (CH₃)₃ (I) 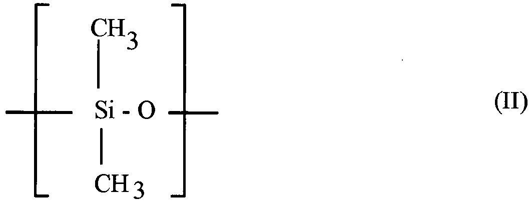 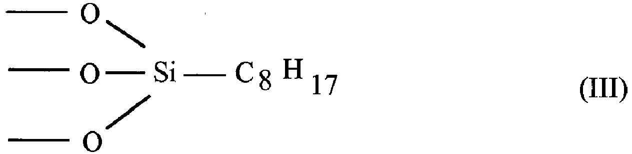
oder

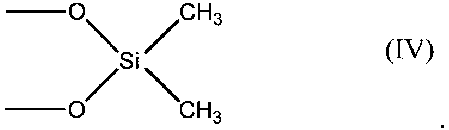

4. Zusammensetzung gemäß irgendeinem der vorhergehenden Ansprüche, wobei das erste hydrolysierte quaternäre Silan aus einem ersten quaternär-Silan Vorläufer mit der Formel (R¹)₄Si hydrolysierbar ist, wobei jedes R¹ unabhängig voneinander aus Alkoxy und Halogen ausgewählt ist, vorzugsweise wobei der erste quaternär-Silan Vorläufer Tetraethoxysilan, Tetramethoxysilan, Tetrapropoxysilan, Tetrabutoxysilan Tetrabromsilan, Tetrachlorsilan oder eine Mischung davon umfasst.

5. Zusammensetzung gemäß irgendeinem der vorhergehenden Ansprüche, wobei das zweite hydrolysierte quaternäre Silan aus einem zweiten hydrolysierbaren quaternär-Silan Vorläufer mit der Formel (R¹)₄₋ₘSi(R²)ₘ hydrolysierbar ist, wobei
• jedes R¹ unabhängig voneinander aus Alkoxy und Halogen ausgewählt ist;
• R² aus Alkyl, Alkenyl, Fluoralkyl, Fluoralkenyl, Aryl, Fluoraryl und Kombinationen davon ausgewählt ist; und
• m = 1 oder 2, vorzugsweise m=1 ist.

6. Zusammensetzung gemäß Anspruch 5, wobei R² mindestens 2 Kohlenstoffatome umfasst, vorzugsweise ist R² C₃-C₃₀.

7. Zusammensetzung gemäß irgendeinem der vorhergehenden Ansprüche, wobei das Gewichtsverhältnis des ersten hydrolysierten Silans zu dem zweiten hydrolysierten Silan mindestens 1:1 beträgt, vorzugsweise im Bereich von 2:1 bis 50:1.

8. Zusammensetzung gemäß irgendeinem der vorhergehenden Ansprüche, wobei die Zusammensetzung die hydrophoben kolloidalen Teilchen in einer Menge von 0,1 bis 10 Gew.-% der Zusammensetzung umfasst.

9. Zusammensetzung gemäß irgendeinem der vorhergehenden Ansprüche, wobei die Zusammensetzung das erste hydrolysierte Silan und das zweite hydrolysierte Silan in einer gesamten Menge von 0,001 bis 10 Gew.-% der Zusammensetzung umfasst.

10. Zusammensetzung gemäß irgendeinem der vorhergehenden Ansprüche, wobei das Lösungsmittel ein polares organisches Lösungsmittel umfasst, vorzugsweise wobei das polare organische Lösungsmittel C₁-C₄-Alkohol umfasst.

11. Zusammensetzung gemäß irgendeinem der vorhergehenden Ansprüche, wobei das Lösungsmittel Wasser umfasst, vorzugsweise wobei das Lösungsmittel Wasser in einer Menge von 5 bis 50 Gew.-% der Zusammensetzung umfasst.

12. Verfahren zur Herstellung einer hydrophoben Beschichtung auf einer Oberfläche, wobei das Verfahren umfasst das Aufbringen der Zusammensetzung gemäß irgendeinem der Ansprüche 1 bis 11 auf die Oberfläche und Trocknen der Zusammensetzung, um die wasserabweisende Beschichtung zu ergeben.

13. Verfahren zur Behandlung einer harten Oberfläche umfassend:
I. Erzeugen einer wasserabweisenden Beschichtung auf der Oberfläche mit dem Verfahren von Anspruch 12;
II. Gestatten, dass sich Schmutz und/oder Flecken auf der Beschichtung ablagern; und dann
iii. Reinigen der Oberfläche, um den Schmutz und/oder die Flecken zu beseitigen,
vorzugsweise wobei der Schritt III umfasst, die Zusammensetzung gemäß irgendeinem der Ansprüche 1 bis 11 auf die Oberfläche aufzubringen.

14. Wasserabweisende Beschichtung erhältlich mit dem Verfahren gemäß Anspruch 12, wobei die Beschichtung einen Kontaktwinkel für Wasser von mindestens 110 Grad, einen Gleitwinkel für Wasser von weniger als 45 Grad oder beides aufweist.

15. Verfahren zur Herstellung einer Zusammensetzung gemäß irgendeinem der Ansprüche bis 11, wobei das Verfahren die Schritte umfasst von:
(i) Erzeugen einer Reaktionsmischung umfassend Wasser, einen ersten quaternär-Silan Vorläufer und einen zweiten quaternär-Silan Vorläufer;
(ii) Hydrolysieren des ersten und des zweiten quaternär-Silan Vorläufers in der Reaktionsmischung, um die ersten und zweiten hydrolysierten quaternären Silane und/oder deren Oligomere bereit zu stellen; und
(iii) Vereinigen der Reaktionsmischung mit den hydrophoben kolloidalen Teilchen, vorzugsweise wobei Schritt (iii) vor oder während Schritt (ii) stattfindet.

## Revendications

1. Composition capable de produire un revêtement hydrophobe, la composition comprenant :
a) des particules colloïdales hydrophobes ;
b) un premier silane quaternaire hydrolysé présentant quatre ligands hydroxyle et/ou son oligomère ;
c) un second silane quaternaire hydrolysé présentant au moins deux ligands hydroxyle et au moins un ligand hydrophobe et/ou son oligomère ; et
d) un solvant.

2. Composition selon la revendication 1, dans laquelle les particules colloïdales sont des particules de silice hydrophobiquement modifiées, de préférence des particules de silice pyrolytique hydrophobiquement-modifiées.

3. Composition selon la revendication 2, dans laquelle les particules de silice comprennent au moins un des groupes suivants :
-O-Si(CH₃)₃ (I) 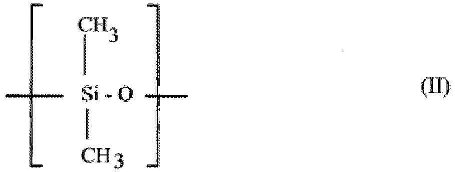 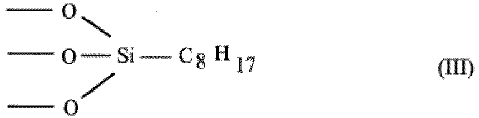
ou

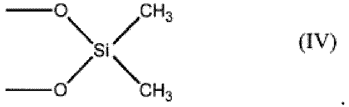

4. Composition selon l'une quelconque des revendications précédentes, dans laquelle le premier silane quaternaire hydrolysé est hydrolysable à partir d'un premier précurseur de silane quaternaire ayant la formule (R¹)₄Si, où chaque R¹ est indépendamment choisi parmi un groupe alcoxy et un halogène, de préférence dans laquelle le premier précurseur de silane quaternaire comprend le tétraéthoxysilane, le tétraméthoxysilane, le tétrapropoxysilane, le tétrabutoxysilane, le tétrabromosilane, le tétrachlorosilane, ou un mélange de ceux-ci.

5. Composition selon l'une quelconque des revendications précédentes, dans laquelle le second silane quaternaire hydrolysé est hydrolysable à partir d'un second précurseur de silane quaternaire ayant la formule (R¹)₄₋ₘSi(R²)ₘ, où :
- chaque R¹ est indépendamment choisi parmi un groupe alcoxy et un halogène ;
- R² est choisi parmi un groupe alkyle, alcényle, fluoroalkyle, fluoroalcényle, aryle, fluoroaryle et des combinaisons de ceux-ci ; et
- m est égal à 1 ou 2, de préférence m = 1.

6. Composition selon la revendication 5, dans laquelle R² comprend au moins 2 atomes de carbone, R² est de préférence en C₃-C₃₀.

7. Composition selon l'une quelconque des revendications précédentes, dans laquelle le rapport massique du premier silane hydrolysé au second silane hydrolysé est d'au moins 1:1, de préférence dans l'intervalle de 2:1 à 50:1.

8. Composition selon l'une quelconque des revendications précédentes, dans laquelle la composition comprend les particules colloïdales hydrophobes dans une quantité de 0,1 à 10 % en poids de la composition.

9. Composition selon l'une quelconque des revendications précédentes, dans laquelle la composition comprend le premier silane hydrolysé et le second silane hydrolysé dans une quantité totale de 0,001 à 10 % en poids de la composition.

10. Composition selon l'une quelconque des revendications précédentes, dans laquelle le solvant comprend un solvant organique polaire, de préférence dans laquelle le solvant organique polaire comprend un alcool en C₁-C₄.

11. Composition selon l'une quelconque des revendications précédentes, dans laquelle le solvant comprend de l'eau, de préférence dans laquelle le solvant comprend de l'eau dans une quantité de 5 à 50 % en poids de la composition.

12. Procédé de formation d'un revêtement hydrophobe sur une surface, le procédé comprenant l'application de la composition selon l'une quelconque des revendications 1 à 11 sur la surface et le séchage de la composition pour produire le revêtement hydrophobe.

13. Procédé de traitement d'une surface dure consistant :
I. à former un revêtement hydrophobe sur la surface par le procédé selon la revendication 12 ;
II. à laisser de la salissure et/ou des taches se déposer sur le revêtement ; et puis
III. à nettoyer la surface pour éliminer la salissure et/ou les taches,
de préférence dans lequel l'étape III comprend l'application de la composition selon l'une quelconque des revendications 1 à 11 sur la surface.

14. Revêtement hydrophobe pouvant être obtenu par le procédé selon la revendication 12, dans lequel le revêtement affiche un angle de contact pour l'eau d'au moins 110 degrés, un angle de glissement pour l'eau inférieur à 45 degrés, ou les deux.

15. Procédé pour la préparation d'une composition selon l'une quelconque des revendications 1 à 11, dans lequel le procédé comprend les étapes :
(i) de formation d'un mélange réactionnel comprenant de l'eau, un premier précurseur de silane quaternaire et un second précurseur de silane quaternaire ;
(ii) d'hydrolyse des premier et second précurseurs de silane quaternaire dans le mélange réactionnel pour fournir les premier et second silanes quaternaires hydrolysés et/ou leurs oligomères ; et
(iii) de combinaison du mélange réactionnel avec les particules colloïdales hydrophobes,
de préférence dans lequel l'étape (iii) a lieu avant ou pendant l'étape (ii).
